# EUROPÄISCHE PATENTSCHRIFT

(11) **EP 2 907 369 B1**
(45) Veröffentlichungstag und Bekanntmachung des Hinweises auf die Patenterteilung: **26.09.2018**
(21) Anmeldenummer: 15401005.2
(22) Anmeldetag: 13.02.2015
(51) Int. Cl.: A01B 69/00, A01C 21/00, A01B 79/00

(54) **Elektronisches Maschinen-Management-System für landwirtschaftliche Arbeitsmaschinen**
Electronic machine management system for agricultural working machines
Système électronique de gestion de machines pour des machines de travail agricoles

(30) Priorität: 17.02.2014 DE 102014101934
(43) Veröffentlichungstag der Anmeldung: 19.08.2015
(73) Patentinhaber: Amazonen-Werke H. Dreyer GmbH & Co. KG, 49205 Hasbergen (DE)
(72) Erfinder: Kühn, Christoph, 49186 Bad Iburg (DE)

(56) Entgegenhaltungen:
- EP-A1- 2 342 963
- EP-B1- 0 181 308
- CA-A1- 2 650 340

## Beschreibung

Die vorliegende Erfindung betrifft ein elektronisches Maschinen-Management-System zum Einleiten von Schalt- und/oder Stellvorgängen bei landwirtschaftlichen Arbeitsmaschinen und ein entsprechendes Verfahren.
Moderne, landwirtschaftliche Arbeitsmaschinen verfügen über eine Vielzahl elektronischer Steuersysteme, um beispielsweise das Ausbringen von Saatgut oder Dünger auf der ganzen zur Verfügung stehenden Feldfläche möglichst effektiv zu ermöglichen.
Dazu zeigt beispielsweise die EP 0 181 308 B1 eine Vorrichtung zum Streuen von Düngemittel mit einem beräderten Fahrzeug, wobei eine digitale Bodenkarteneinrichtung zur Angabe der Verteilung der unterschiedlichen Bodenarten auf dem zu düngenden Feld und ein Positionsgeber zum Erzeugen von Feldkoordinatensignalen zur Angabe der relativen Position des Fahrzeugs zu dem Feld bei seiner Bewegung über das Feld vorgesehen sind. Ferner ist ein Geschwindigkeitsgeber vorgesehen, um die Geschwindigkeit des Fahrzeugs bei der Bewegung über das Feld anzugeben. Über eine vorgesehene Recheneinrichtung werden die Daten der Bodenkarteneinrichtung, des Positionsgebers und des Geschwindigkeitsgebers verarbeitet und ein Zufuhrsteuersignal an die Zuführmittel übergeben, so dass der Dünger gezielt auf bestimmten Bereichen des Feldes ausgegeben werden kann.
Die CA 2 650 340 A1 beschreibt ein Verfahren zum Betreiben einer Sämaschine auf einem Feld, wobei überlappende Arbeitsbereiche vermieden werden.

Während diese und ähnliche Vorrichtungen gut geeignet sind, um die Menge ausgebrachter Düngemittel oder beispielsweise Saatgut während des Betriebs der Vorrichtungen zu steuern, erweist es sich als schwierig, den Beginn der Ausgabe von Streugut oder Düngemitteln bei Eintritt eines bestimmten Ereignisses, beispielsweise bei Auffahrt des Fahrzeuges auf das zu bedüngende oder zu bestreuende Feld, exakt zu regeln. Dadurch kommt es entweder zu Materialverlust, also zu Verlust von Dünger oder Saatgut, oder ein Teil der zur Verfügung stehenden Fläche des Feldes wird nicht effektiv genutzt.

Ausgehend vom Stand der Technik ist es daher Aufgabe der vorliegenden Erfindung, ein elektronisches Maschinen-Management-System einer landwirtschaftlichen Arbeitsmaschine bereitzustellen, das eine energiesparende und gleichzeitig effektive Steuerung einzelner Komponenten der landwirtschaftlichen Arbeitsmaschine, insbesondere Ausbringvorrichtung, ermöglicht.
Diese Aufgabe wird erfindungsgemäß durch das elektronische Maschinen-Management-System nach Anspruch 1 und das Verfahren zum Einleiten von Schalt- und/oder Stellvorgängen nach Anspruch 8 gelöst. Vorteilhafte Weiterbildungen der Erfindung sind in den Unteransprüchen erfasst.
Das erfindungsgemäße elektronische Maschinen-Management-System zum Einleiten von Schalt- und/oder Stellvorgängen bei landwirtschaftlichen Arbeitsmaschinen umfasst ein geographisches Modul, das geographische Informationen über den Ort der landwirtschaftlichen Arbeitsmaschine in Echtzeit ermittlet, und ein maschinenspezifisches Modul, das Komponenten der landwirtschaftlichen Arbeitsmaschine steuert, wobei das geographische Modul in Abhängigkeit der geographischen Informationen vor Eintreten eines geplanten Ereignisses ein für dieses Ereignis indikatives Signal an das maschinenspezifische Modul überträgt und wobei das maschinenspezifische Modul in Abhängigkeit von diesem Signal wenigstens eine der Komponenten in einen Stand-by-Zustand, in dem die Komponente in einen zumindest teilweise arbeitsbereiten Zustand gebracht wird, versetzt. So kann zum Einen sichergestellt werden, dass die Komponenten rechtzeitig arbeitsbereit sind und gleichzeitig kann so eine deutlich eneregiesparsamere Maschinensteuerung realisiert werden, da die einzelnen Komponenten beispielsweise aus einem energiesparenden Ruhemodus vor dem eigentlichen Ereignis in einen Stand-by-Zustand überführt werden, in dem sie dann arbeitsbereit sind.
In einer Ausführungsform ist das System dadurch gekennzeichnet, dass das maschinenspezifische Modul einen Betriebsmodus der wenigstens einen Komponente weiterhin auf einen Betriebszustand und auf einen Ruhezustand einstellen kann. Mit dieser Ausführungsform stehen dann insgesamt drei verschiedene Betriebsmodi zur Verfügung, die insbesondere mit Hinblick auf den Energieverbrauch in vorteilhafter Weise miteinander kombiniert werden können.

In einer Weiterbildung dieser Ausführungsform kann das maschinenspezifische Modul die wenigstens eine Komponente aufgrund des Signals von dem Ruhezustand in den Stand-by-Zustand versetzen und das maschinenspezifische Modul ist weiterhin geeignet, die wenigstens eine Komponente vom Betriebszustand in den Ruhezustand zu versetzen. Es ist so möglich, die Komponente so lange im Ruhezustand, also in einem energiesparenden Modus, zu belassen, bis das geplante Ereignis, beispielsweise das Auffahren auf das zu bearbeitende Feld, fast eintritt und erst dann die Energiezufuhr zu der entsprechenden Komponente zu starten, so dass sie in den Stand-by-Zustand überführt werden kann. Ist die Bearbeitung des Felds oder Feldabschnitts beendet, so kann die Komponente aus dem Betriebszustand wieder in den Ruhezustand versetzt werden, so dass hier Energie gespart werden kann.

In einer Ausführungsform der Erfindung ist das System dadurch gekennzeichnet, dass das geographische Modul einen Positionssensor und einen Geschwindigkeitssensor umfasst und das Signal in Abhängigkeit einer Position und einer Geschwindigkeit der landwirtschaftlichen Arbeitsmaschine an das maschinenspezifische Modul überträgt. Es kann so sichergestellt werden, dass die Komponente rechtzeitig in den Stand-by-Zustand überführt wird, so dass der Betrieb der Komponente auch mit Eintritt des Ereignisses erfolgen kann.

Es kann weiterhin vorgesehen sein, dass der Stand-by-Zustand wenigstens eines von:
Überführen der Komponente in eine Arbeitsstellung; Einschalten der Komponente; Einstellen wenigstens eines Betriebsparameters auf den Arbeitswert; umfasst. Werden diese arbeitsvorbereitenden Maßnahmen bei dem Versetzen der Komponente in den Stand-by-Zustand durchgeführt, so kann direkt mit Eintritt des geplanten Ereignisses oder unter Berücksichtigung einer Totzeit der Komponente der Betrieb der Komponente aufgenommen werden.

In einer Ausführungsform ist das geographische Modul geeignet, das Signal in Abhängigkeit von Ort und Geschwindigkeit der landwirtschaftlichen Arbeitsmaschine zu einer vorbestimmten Zeit vor dem geplanten Ereignis an das maschinenspezifische Modul zu übertragen. Da die benötigte Zeit zur Überführung einzelner Komponenten in den Stand-by-Zustand komponentenabhängig sein kann, kann über diese orts- und geschwindigkeitsabhängige Aussendung des Signals das Versetzen der Komponente in den Stand-by-Zustand sichergestellt werden.

In einer Weiterbildung dieser Ausführungsform kann das geographische Modul auch Informationen über Totzeiten der wenigstens einen Komponente für eine Berechnung der vorbestimmten Zeit berücksichtigen. Mit dieser Ausführungsform kann nicht nur die benötigte Zeit zum Versetzen der Komponente in den Stand-by-Zustand selbst sondern auch Totzeiten, die beispielsweise zwischen der Öffnung eines Ventils für eine Leitung und dem tatsächlichen Ausbringen des durch die Leitung transportierten Stoffes auf das Feld bestehen, berücksichtigt werden. Somit können zu frühes oder zu spätes Ausbringen von Stoffen wie Düngemittel oder Saatgut vermieden werden.

Mit beispielsweise einem der obigen Systeme lässt sich ein Verfahren zum Einleiten von Schalt- und/oder Stellvorgängen bei landwirtschaftlichen Arbeitsmaschinen verwirklichen, wobei das das Verfahren ein Erfassen von geographischen Informationen über den Ort der landwirtschaftlichen Arbeitsmaschine in Echtzeit und Versetzen wenigstens einer Komponente der landwirtschaftlichen Arbeitsmaschine in einen Stand-by-Zustand, in dem die Komponente in einen zumindest teilweise arbeitsbereiten Zustand gebracht wird, umfasst, wobei das Versetzen in Abhängigkeit eines für ein geplantes Ereignis indikatives Signal basierend auf den geographischen Informationen vor Eintreten des geplanten Ereignisses erfolgt. Dieses Verfahren erlaubt eine energiesparende und zugleich sehr zuverlässige Steuerung von Komponenten einer landwirtschaftlichen Arbeitsmaschine.

In einer Ausführungsform ist das Verfahren dadurch gekennzeichnet, dass das geplante Ereignis an einem vorbestimmten Ort stattfindet und die geographischen Informationen zumindest den vorbestimmten Ort umfassen. Ist der vorbestimmte Ort für das geplante Ereignis, beispielsweise eine Auffahrt auf ein Feld, so kann das Versetzen wenigstens einer der Komponenten in den Stand-by-Zustand auch in Abhängigkeit von dem Ort der landwirtschaftlichen Arbeitsmaschine relativ zu dem vorbestimmten Ort erfolgen.

Es kann vorgesehen sein, dass das Signal vor Eintritt des geplanten Ereignisses in Abhängigkeit von der Geschwindigkeit und dem Ort der landwirtschaftlichen Arbeitsmaschine von einem geographischen Modul an ein maschinenspezifisches Modul, das die wenigstens eine Komponente steuert, übertragen wird. Somit kann die Übertragung des Signals zum Versetzen der wenigstens einen Komponente in den Stand-by-Zustand in Abhängigkeit des Ortes und der Geschwindigkeit erfolgen und so sichergestellt werden, dass der Stand-by-Zustand vor Eintritt des geplanten Ereignisses erreicht wird.

Gemäß einer Ausführungsform der Erfindung ist das Verfahren dadurch gekennzeichnet, dass das Signal zu einer vorbestimmten Zeit vor Eintritt des geplanten Ereignisses übertragen wird, wobei die vorbestimmte Zeit für die wenigstens eine Komponente spezifisch ist. Da eine benötigte Zeit zum Versetzen einer Komponente in den Stand-by-Zustand zumeist bekannt ist, kann so die Versetzung der Komponente in den Stand-by-Zustand gezielter erfolgen.

In einer Weiterbildung dieser Ausführungsform ist die vorbestimmte Zeit größer als die Totzeit der wenigstens einen Komponente und/oder umfasst die Totzeit. So können auch negative Effekte aufgrund der Totzeiten einzelner Komponenten berücksichtigt werden und somit die Betriebsbereitschaft der Komponente bei Eintritt des geplanten Ereignisses sichergestellt werden.

Es kann ferner vorgesehen sein, dass das Versetzen in den Stand-by-Zustand wenigstens eines von Überführen der Komponente in eine Arbeitsstellung; Einschalten der Komponente; Einstellen wenigstens eines Betriebsparameters auf den Arbeitswert; umfasst. Mit dieser Ausführungsform des Verfahrens können grundlegende Anforderungen an die Betriebsbereitschaft der Komponente durch Versetzen in den Stand-by-Zustand erfüllt werden.

In einer vorteilhaften Weiterbildung ist das Verfahren dadurch gekennzeichnet, dass die wenigstens eine Komponente vom maschinenspezifischen Modul von dem Stand-by-Zustand in einen Betriebszustand versetzt wird, und/oder von einem Ruhezustand in den Stand-by-Zustand versetzt wird und/oder von dem Betriebszustand in den Ruhezustand versetzt wird und/oder von dem Betriebszustand in den Stand-by-Zustand versetzt wird. Diese variable Versetzung der Komponente in die unterschiedlichen Zustände erlaubt eine sehr energiesparende Arbeitsweise.

Es kann vorgesehen sein, dass der Energieverbrauch der Komponente im Ruhezustand geringer als im Stand-by-Zustand und im Betriebszustand ist. Eine Überführung in den Ruhezustand wirkt somit energiesparend.
- Fig. 1: Schematische Darstellung einer Ausführungsform der Erfindung.
- Fig. 2a-2c: Schematische Darstellung eines Bewegungsablaufs einer erfindungsgemäßen landwirtschaftlichen Arbeitsmaschine.
- Fig. 3a+3b: Schematische Darstellung des Ablaufs eines Verfahrens gemäß zweier Ausführungsformen.

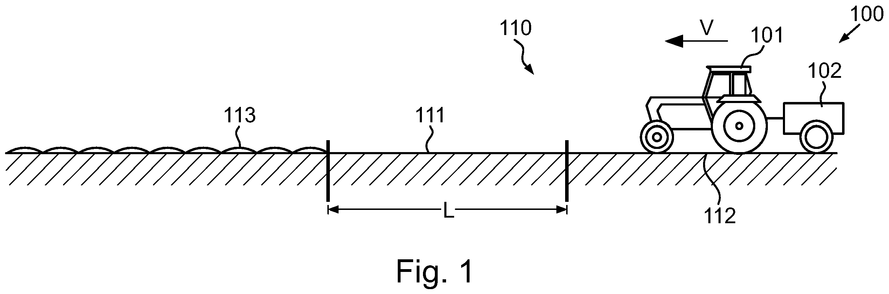

Fig. 1 zeigt eine landwirtschaftliche Arbeitsmaschine 100, die mit dem erfindungsgemäßen elektronischen Maschinen-Management-System zum Einleiten von Schalt- und/oder Stellvorgängen ausgestattet ist. Die landwirtschaftliche Arbeitsmaschine 100 umfasst üblicherweise ein Triebfahrzeug 101, beispielsweise einen Traktor, und wenigstens eine Komponente 102, die geeignet ist, einen bestimmten landwirtschaftlichen Arbeitsprozess durchzuführen. Die Komponente 102 kann dabei beispielsweise eine Düngerausgabe, eine Saatgutausgabe oder einen Pflug umfassen. Ebenso ist denkbar, dass das Triebfahrzeug 101 mit einem Anhänger verbunden ist, in dem mehrere Komponenten 102 untergebracht sind. Dazu zählen beispielsweise Gestänge mit einer Vielzahl von Feldspritzen zum Ausbringen von Düngemittel oder Saatgut, wobei jede der Feldspritzen oder jeweils eine Gruppe von Feldspritzen eine Komponente gemäß der Erfindung sein kann. Die landwirtschaftliche Arbeitsmaschine 100 verfügt weiterhin über ein nicht dargestelltes geografisches Modul. Dieses geografische Modul kann zumindest Informationen über den Ort der landwirtschaftlichen Arbeitsmaschine in Echtzeit ermitteln. So kann es beispielsweise den Ort der landwirtschaftlichen Arbeitsmaschine 100 auf dem Wegabschnitt 112 bestimmen. vorzugsweise erfolgt diese Bestimmung auch in Relation zu einer landwirtschaftlich zu bearbeitenden Fläche 113, wie beispielsweise einem Feld. Weiterhin umfasst die landwirtschaftliche Arbeitsmaschine 100 ein maschinenspezifisches Modul, das die wenigstens eine Komponente 102 der landwirtschaftlichen Arbeitsmaschine steuern kann.

Erfindungsgemäß ist vorgesehen, dass das geografische Modul auch zumindest teilweise über Informationen über ein geplantes Ereignis, z.B. das Ausbringen von Düngemittel oder Saatgut verfügt. Dieses geplante Ereignis kann, muss jedoch nicht, bestimmte Ortskoordinaten umfassen. So kann dieses geplante Ereignis beispielsweise darin bestehen, dass mit dem Ausbringen von Düngemittel begonnen wird, sobald die landwirtschaftliche Arbeitsmaschine 100 auf das Feld 113 auffährt. In diesem Fall ist dieses geplante Ereignis das Auffahren auf das Feld 113, was an einem bestimmten Ort stattfinden kann oder mit dem Eindringen der landwirtschaftlichen Arbeitsmaschine 100 in einen bestimmten geografischen Bereich (der beispielsweise durch die Begrenzung des Feldes definiert sein kann) gegeben ist.

Damit durch die Komponente 102 mit der Ausführung des landwirtschaftlichen Arbeitsprozesses begonnen werden kann, ist es erforderlich, dass diese Komponente arbeitsbereit ist. Um dies sicherzustellen, ist vorgesehen, dass das geografische Modul bereits vor Eintritt des geplanten Ereignisses ein Signal an das maschinenspezifische Modul zur Steuerung der Komponente 102 übermittelt, wobei dieses Signal darin besteht, dass das maschinenspezifische Modul zu einer gegebenen Zeit, beispielsweise bei Übermittlung des Signals, die Komponente in einen Stand-by-Zustand versetzt. In diesem Stand-by-Zustand werden einzelne Geräte der Komponente 102 oder die gesamte Komponente 102 in einen zumindest teilweise arbeitsbereiten Zustand versetzt. Dieser arbeitsbereite Zustand kann beispielsweise das Überführen der Komponente in eine Arbeitsstellung umfassen, aber auch das Einschalten der Komponente bzw. die Initiierung der Stromversorgung der Komponente oder das Einstellen wenigstens eines Betriebsparameters auf den Arbeitswert. Das Überführen in die Arbeitsstellung kann beispielsweise in der Ausrichtung von Feldspritzen bestehen. Das Einstellen bestimmter Maschinenparameter kann beispielsweise das Einstellen eines bestimmten Drucks oder einer Ventilöffnungsgröße für das Ausbringen eines landwirtschaftlichen Materials oder das Einstellen bestimmter Drehzahlen von Dosiertrommeln oder Ähnliches umfassen, ist jedoch nicht darauf beschränkt. Erfindungsgemäß umfasst das Versetzen der Komponente in den Stand-by-Zustand sämtliche Vorgänge, die die Arbeitsbereitschaft der Komponente sicherstellen.

Damit die Arbeitsbereitschaft der Komponente 102 sichergestellt ist, bevor das geplante Ereignis eintritt, gegebenenfalls auch ein gewisses Zeitintervall früher, ist vorgesehen, dass das geografische Modul beispielsweise in Abhängigkeit der Geschwindigkeit V des Triebfahrzeugs 101 und in Abhängigkeit der Entfernung zum geplanten Ereignis die noch verbleibende Zeit bis zum Eintritt des Ereignisses bestimmt. Ist beispielsweise diese Zeit als ein bestimmtes Zeitintervall T festgelegt, so kann das geografische Modul das Signal an das maschinenspezifische Modul in einer Entfernung L in einem Bereich 111 vor dem geplanten Ereignis übertragen, wobei diese Entfernung L aufgrund der benötigten Zeit T geschwindigkeitsabhängig ist. In vorteilhafter Weise ist vorgesehen, dass die Berechnung der verbleibenden Zeit bis zum Eintritt des Ereignisses oder der Entfernung bis zum Eintritt des Ereignisses in Echtzeit berechnet wird, so dass das Versetzen der Komponente in den Stand-by-Zustand durch Übertragung des Signals von dem geografischen Modul an das maschinenspezifische Modul rechtzeitig erfolgen kann.

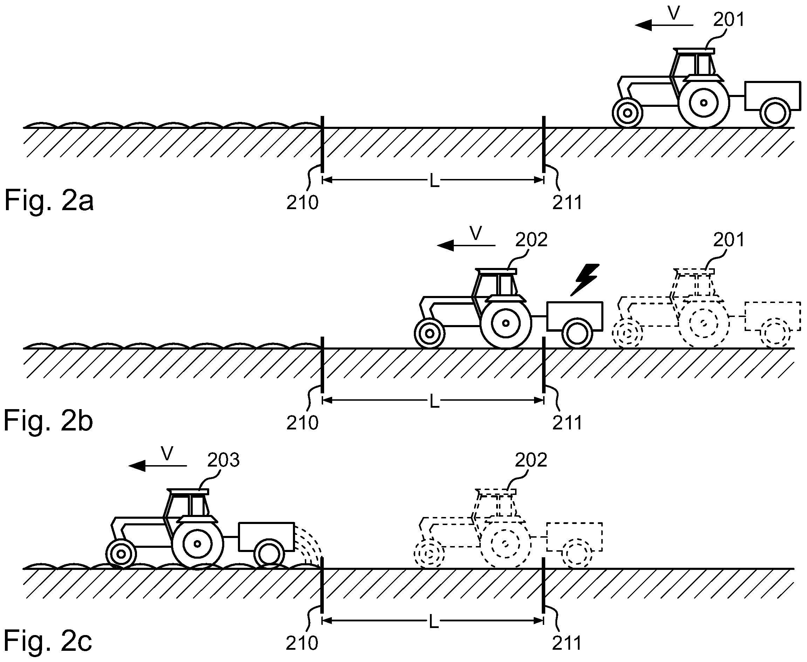

Fig. 2a bis 2c zeigt eine schematische Darstellung des Verlaufs der Steuerung der Komponente. Für dieses Beispiel wird angenommen, dass sich die landwirtschaftliche Arbeitsmaschine 201 mit konstanter Geschwindigkeit V bewegt. Das geografische Modul berechnet vorzugsweise die benötigte Zeit zum Eintritt des Ereignisses in Echtzeit, z.B. in periodischen Intervallen von 1, 2 oder 5 Sekunden, basierend auf aktuellem Ort und Geschwindigkeit der landwirtschaftlichen Arbeitsmaschine und dem Ort des geplanten Ereignisses. So können auch Veränderungen in der Geschwindigkeit des Triebfahrzeugs berücksichtigt werden. Ändert sich die Geschwindigkeit des Fahrzeugs, so verändert sich auch die verbleibende Zeit, bis das geplante Ereignis eintritt. Bei Annahme einer konstanten Geschwindigkeit ändert sich die Zeit bis zum Eintritt des Ereignisses jedoch nicht, was hier jedoch nur dazu dient, die Anschaulichkeit zu verbessern.

Für das Versetzen der Komponente in den Stand-by-Zustand wird eine bestimmte Zeit T benötigt. Diese kann komponentenspezifisch sein oder so festgelegt sein, dass jede mögliche Komponente rechtzeitig in den Stand-by-Zustand versetzt werden kann, bevor das geplante Ereignis eintritt. Bei konstanter Geschwindigkeit V ist diese Zeit T gleichbedeutend mit einer bestimmten Entfernung L vor Eintritt des geplante Ereignisses, bei der die Komponente in den Stand-by-Zustand versetzt werden muss. In Fig. 2a ist die landwirtschaftliche Arbeitsmaschine 201 noch weiter vom Ort des geplanten Ereignisses 210 entfernt als bei der Geschwindigkeit V nötig wäre, um die Komponente in den Stand-by-Zustand zu versetzen. Bewegt sich die landwirtschaftliche Arbeitsmaschine mit der Geschwindigkeit V weiter, so verringert sich die Entfernung zum geplanten Ereignis 210 und damit auch die Zeit, bis dieses Ereignis eintritt. In Fig. 2b ist die landwirtschaftliche Arbeitsmaschine noch um die Entfernung L vom Ort des geplanten Ereignisses 210 entfernt und passiert gerade den Punkt 211. Das geografische Modul führt auch in diesem Bereich erneut eine Berechnung der noch verbleibenden Zeit bis zum Eintritt des geplanten Ereignisses durch. In dieser Position 202 der landwirtschaftlichen Arbeitsmaschine wird durch das geografische Modul erkannt, dass die noch verbleibende Zeit bei der momentanen Geschwindigkeit der Zeit entspricht oder geringfügig größer ist als die Zeit, die nötig ist, um die Komponente in den Stand-by-Zustand zu versetzen. Das geografische Modul überträgt nun das Signal an das maschinenspezifische Modul, welches die Komponente so steuert, dass sie in den Stand-by-Modus versetzt wird. Dies ist hier schematisch durch den Blitz angedeutet, der beispielsweise repräsentativ für die Herstellung der Stromversorgung der Komponente steht. Da das Versetzen der Komponente in den Stand-by-Zustand nicht instantan erfolgt, sondern eine gewisse Zeit in anspruch nimmt, ist der Übergang von Fig. 2b zu Fig. 2c so zu verstehen, dass auf der Länge L sämtliche Handlungen durchgeführt werden, um die Komponente vollständig in den Stand-by-Zustand zu versetzen und sicherzustellen, dass diese arbeitsbereit ist. Dazu zählt, wie weiter oben erwähnt, beispielsweise das Absenken oder Ausrichten von Feldspritzen oder das Hochfahren der Drehzahl von Dosiertrommeln. Die Länge L ist so bestimmt, dass die entsprechenden Aktionen in der verbleibenden Zeit bis zum Eintritt des Ereignisses 210 durchgeführt werden können.

In Fig. 2c erreicht die landwirtschaftliche Arbeitsmaschine nun die Position 203 und damit den Ort des geplanten Ereignisses 210. Da die Komponente bereits in den Stand-by-Zustand versetzt wurde, kann exakt mit Eintritt des geplanten Ereignisses 210 mit dem Betrieb der Komponente begonnen werden. So kann beispielsweise genau bei Passieren der Feldgrenze mit dem Ausbringen des Saatguts oder des Düngemittels begonnen werden.

Bewegt sich das Triebfahrzeug nicht mit konstanter Geschwindigkeit, kann vorgesehen sein, dass die vom geografischen Modul bestimmte Entfernung L, bei der die Komponente in den Stand-by-Zustand versetzt wird, so gewählt wird, dass die Entfernung L um 10 % größer ist als die bei einer aktuellen Messung der Geschwindigkeit, multipliziert mit der für das Versetzen der Komponente in den Stand-by-Zustand benötigten Zeit ergebende Entfernung. So kann sichergestellt werden, dass selbst bei Beschleunigung des Triebfahrzeugs die Übertragung des Signals rechtzeitig stattfindet. Abhängig von der aktuellen und der maximal erreichbaren Geschwindigkeit des Triebfahrzeugs kann das geografische Modul die Entfernung auch 20 %, 30 % oder 50 % größer als die bei der aktuellen Geschwindigkeit benötigte Entfernung zum Versetzen der Komponente in den Stand-by-Zustand wählen.

Ebenso können von dem geografischen Modul Totzeiten berücksichtigt werden, die entstehen, wenn beispielsweise Düngemittel von Feldspritzen ausgebracht werden soll. Diese Totzeiten entstehen dadurch, dass selbst bei Initiierung des Betriebs der Komponente, in diesem Fall also der Feldspritzen, eine gewisse Zeit zwischen Inbetriebnahme und der tatsächlichen Ausbringung des Düngemittels auf dem Feld vergeht, die mit dem Transport des Düngemittels durch die Feldspritze korreliert. Bei der Bestimmung der Entfernung L, bei der die Komponente in den Stand-by-Zustand versetzt wird, kann das geografische Modul also zusätzlich zu der Zeit, die benötigt wird, um die Komponente in den Stand-by-Zustand zu versetzen, die Totzeit der Komponente bei Inbetriebnahme berücksichtigen, wodurch die Entfernung L um einen gewissen Wert größer wird.

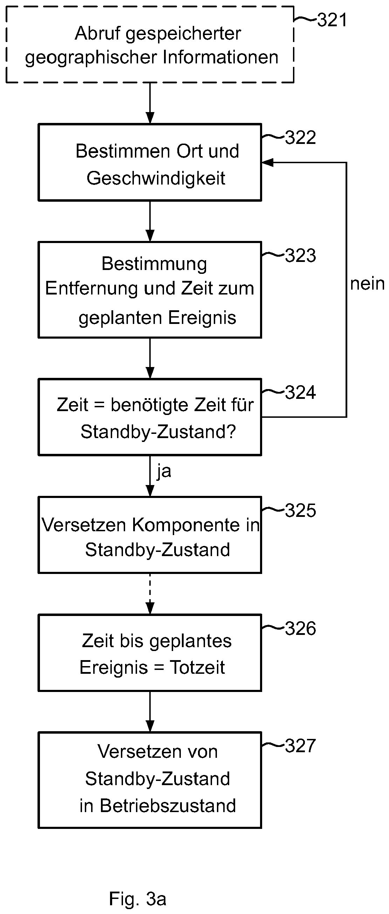

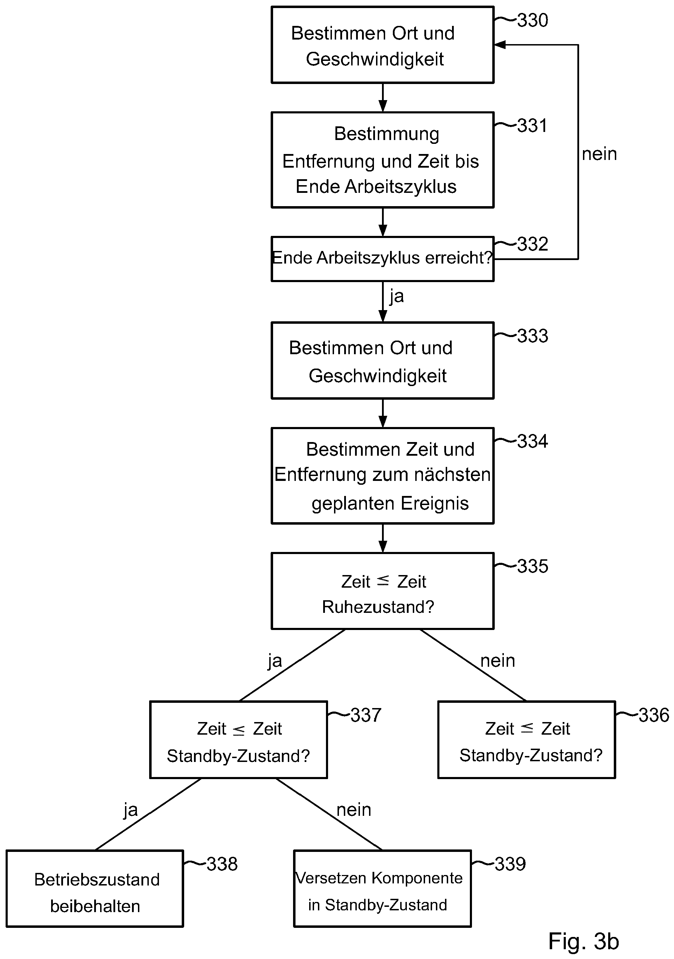

Fig. 3a und 3b zeigen Ausführungsformen eines Verfahrens zum Einleiten von Schalt- und/oder Stellvorgängen bei landwirtschaftlichen Arbeitsmaschinen gemäß einer Ausführungsform der Erfindung.

In Fig. 3a wird der in Fig. 2a-2c beschriebene Prozess in einzelnen Teilschritten beschrieben. In Schritt 321 wird beispielsweise mit Maschinenstart oder mit Eingabe eines Benutzers die zu einem bestimmten geplanten Ereignis gehörige geografische Information abgerufen. Diese kann gespeichert sein oder aber durch den Benutzer direkt eingegeben werden. Diese Information kann den Ort des geplanten Ereignisses aber auch die mit Eintritt des geplanten Ereignisses durchzuführenden Tätigkeiten umfassen, wie beispielsweise das Ausbringen von Dünger. Weiterhin können bestimmte Merkmale der Komponente in den geografischen Informationen zu dem geplanten Ereignis hinterlegt sein, beispielsweise die Zeit, die benötigt wird, um die Komponente in den Stand-by-Zustand zu versetzen oder eventuelle Totzeiten. Bewegt sich die landwirtschaftliche Arbeitsmaschine dann in Richtung des geplanten Ereignisses, wird fortwährend, beispielsweise in kurzen Zeitintervallen von 1 Sekunde, 2 Sekunden oder 5 Sekunden, der Ort und/oder die Geschwindigkeit, vorzugsweise beides, der landwirtschaftlichen Arbeitsmaschine bestimmt 322. Dies kann beispielsweise mit Hilfe von GPS- oder Geschwindigkeitssensoren erfolgen. Auf Grundlage dieser Daten und in Zusammenhang mit den geografischen Informationen wird die Entfernung und die Zeit zum geplanten Ereignis bestimmt 323. Auch dies geschieht fortlautend, um eventuelle Veränderungen in der Geschwindigkeit der landwirtschaftlichen Arbeitsmaschine berücksichtigen zu können. Es wird dann in Schritt 324 überprüft, ob die Zeit gleich der benötigten Zeit für das Versetzen der Komponente in den Stand-by-Zustand ist. Ist dies nicht der Fall, fährt das geografische Modul mit Schritt 322 und 323 fort. Dies geschieht so lange, bis die Zeit bis zum Eintritt des geplanten Ereignisses der Zeit entspricht, die benötigt wird, um die Komponente in den Stand-by-Zustand zu überführen. Hier kann auch eine Toleranzgrenze vorgegeben sein, so dass die Übereinstimmung zwischen benötigter und zur Verfügung stehender Zeit auch um ± 2s, ± 5s, ± 10s oder eine andere Zahl von Sekunden oder ± 5% oder ± 10% der benötigten Zeit betragen kann.

In diesem Fall sendet das geografische Modul das Signal an das maschinenspezifische Modul, welches die Komponente in den Stand-by-Zustand versetzt 325. Somit wird die Komponente rechtzeitig in den Arbeitszustand versetzt.

Es kann weiterhin vorgesehen sein, dass, wie weiter oben beschrieben, die Totzeit berücksichtigt wird. In einer Ausführungsform misst das geografische Modul daher, ob die noch verbleibende Zeit bis zum Eintritt des geplanten Ereignisses der Totzeit der entsprechenden Komponente entspricht. Ist dies der Fall, so wird in Schritt 327 der Betrieb der in den Stand-by-Zustand versetzten Komponente aufgenommen.

Fig. 3b zeigt eine weitere vorteilhafte Ausführungsform des Verfahrens, bei der die landwirtschaftliche Arbeitsmaschine und insbesondere die entsprechende Komponente bereits in Betrieb ist. In dieser Ausführungsform wird in Schritt 330 der Ort und die Geschwindigkeit der landwirtschaftlichen Arbeitsmaschine bestimmt. In Schritt 331 wird vom geografischen Modul ferner bestimmt, in welcher Entfernung sich die landwirtschaftliche Arbeitsmaschine zum Ende des Arbeitszyklus, beispielsweise dem Düngungsvorgang, befindet und wie viel Zeit sie bei der momentanen Geschwindigkeit dafür benötigen wird. Stellt das geografische Modul in Schritt 332 fest, dass das Ende des Arbeitszyklus noch nicht erreicht ist, fährt es mit der Bestimmung von Ort und Geschwindigkeit in Schritt 330 fort, bis dies der Fall ist.

Ist das Ende des Arbeitszyklus erreicht, findet in Schritt 333 erneut eine Bestimmung von Ort und Geschwindigkeit der Arbeitsmaschine statt und in Schritt 334 wird die Entfernung und die benötigte Zeit zum nächsten geplanten Ereignis bestimmt. Es ist in dieser Ausführungsform des Verfahrens vorgesehen, dass das nächste geplante Ereignis auch einen Arbeitszyklus, wie beispielsweise das erneute Ausbringen von Düngemittel oder Saatgut, umfasst. Dieser Fall tritt ein, wenn die landwirtschaftliche Arbeitsmaschine beispielsweise beim Durchfahren einer Kurve die Feldgrenzen verlässt und somit der Arbeitszyklus zum Aufbringen von Düngemittel in der einen Richtung zwar beendet ist, jedoch nach Durchführen der Wende wieder aufgenommen wird.

Es wird dann vom geografischen Modul ermittelt 335, ob die verbleibende Zeit bis zum Eintritt des nächsten geplanten Ereignisses kleiner ist als die Zeit, die notwendig ist, um die Komponente in den vollständigen Ruhezustand zu versetzen 336. Ist dies nicht der Fall, so wird die Komponente aus Energiespargründen in den Ruhezustand versetzt. Dabei wird beispielsweise die Stromzufuhr unterbrochen und die Komponente aus einer Arbeitsstellung in eine Ruhestellung überführt, beispielsweise der Pflug angehoben oder Feldspritzen ausgeschaltet.

Ist die verbleibende Zeit kleiner als die Zeit, die für das Versetzen der Komponente in den Ruhezustand erforderlich ist, so überprüft das geografische Modul in Schritt 337, ob die verbleibende Zeit bis zum Eintritt des nächsten geplanten Ereignisses kleiner als die Zeit für das Versetzen der Komponente in den Stand-by-Zustand ist. Ist dies nicht der Fall, wird die Komponente in den Stand-by-Zustand versetzt. In diesem ist sie prinzipiell noch arbeitsbereit, verbraucht jedoch weniger Energie als im Betriebszustand. Ist die verbleibende Zeit bis zum Eintritt des nächsten geplanten Ereignisses im Schritt 337 jedoch kleiner als die Zeit, die nötig ist, um die Komponente in den Stand-by-Zustand zu versetzen, so wird der Betriebszustand beibehalten 338 und es kann, beispielsweise unter Berücksichtigung der Totzeit, jederzeit der Betrieb der Komponente bei Eintritt des nächsten geplanten Ereignisses wieder aufgenommen werden.

Um möglichst energiesparsam vorzugehen, kann vorgesehen sein, dass die Überführung der Komponente in den Ruhezustand nur dann durchgeführt wird, wenn ein erhebliches Zeitintervall, beispielsweise 2 Minuten oder 5 Minuten bis zum Eintritt des nächsten geplanten Ereignisses, verbleibt, da ansonsten zwar durch das Versetzen der Komponente in den Ruhezustand zunächst Energie gespart wird, das erneute Versetzen in den Stand-by-Zustand und in den Betriebszustand jedoch sehr viel Energie beanspruchen kann, womit kaum oder gar keine Energieersparnis einhergeht. Ebenso verhält es sich mit dem Versetzen der Komponente in den Stand-by-Zustand zwischen dem Ende eines Arbeitszyklus und dem Eintritt des nächsten geplanten Ereignisses.

Es kann auch vorgesehen sein, dass die Komponente zwischen zwei verschiedenen geplanten Ereignissen bzw. Arbeitszyklus überhaupt nicht in den Ruhezustand versetzt wird sondern nur gemäß Schritt 337, 338 und 339 bei hinreichender Zeit in den Stand-by-Zustand überführt wird. Grundsätzlich können bei der Ausführung des Verfahrens nach Fig. 3b bei der Berechnung der verbleibenden Zeiten bis zum Eintritt des nächsten geplanten Ereignisses nicht nur die Zeiten berücksichtigt werden, die nötig sind, um die Komponente aus dem Betriebszustand in den Ruhezustand oder Stand-by-Zustand zu überführen sondern auch die Zeiten, die nötig sind, um die volle Betriebsbereitschaft aus dem Stand-by-Zustand oder dem Ruhezustand, beispielsweise auch unter Berücksichtigung der Totzeiten, wieder herzustellen.

## Patentansprüche

1. Elektronisches Maschinen-Management-System zum Einleiten von Schalt- und/oder Stellvorgängen bei landwirtschaftlichen Arbeitsmaschinen (100), wobei das System ein geographisches Modul, das geographische Informationen über den Ort der landwirtschaftlichen Arbeitsmaschine (100) in Echtzeit ermittelt, und ein maschinenspezifisches Modul, das Komponenten (102) der landwirtschaftlichen Arbeitsmaschine steuert, umfasst, **dadurch gekennzeichnet, dass**
das geographische Modul in Abhängigkeit der geographischen Informationen vor Eintreten eines geplanten Ereignisses ein für dieses Ereignis indikatives Signal an das maschinenspezifische Modul überträgt und dass das maschinenspezifische Modul in Abhängigkeit von diesem Signal wenigstens eine der Komponenten (102) in einen Stand-by-Zustand, in dem die Komponente (102) in einen zumindest teilweise arbeitsbereiten Zustand gebracht wird, versetzt.

2. System nach Anspruch 1, **dadurch gekennzeichnet, dass** das das maschinenspezifische Modul einen Betriebsmodus der wenigstens einer Komponente (102) weiterhin auf einen Betriebszustand und auf einen Ruhezustand einstellen kann.

3. System nach Anspruch 2, **dadurch gekennzeichnet, dass** das maschinenspezifische Modul die wenigstens eine Komponente (102) aufgrund des Signals von dem Ruhezustand in den Stand-by-Zustand versetzen kann und das maschinenspezifische Modul weiterhin geeignet ist, die wenigstens eine Komponente (102) vom Betriebszustand in den Ruhezustand zu versetzen.

4. System nach einem der Ansprüche 1 bis 3, **dadurch gekennzeichnet, dass** das geographische Modul einen Positionssensor und einen Geschwindigkeitssensor umfasst und das Signal in Abhängigkeit einer Position und einer Geschwindigkeit (v) der landwirtschaftlichen Arbeitsmaschine an das maschinenspezifische Modul überträgt.

5. System nach einem der Ansprüche 1 bis 4, **dadurch gekennzeichnet, dass** der Stand-by-Zustand wenigstens eines von:
Überführen der Komponente in eine Arbeitsstellung;
Einschalten der Komponente;
Einstellen wenigstens eines Betriebsparameters auf den Arbeitswert;
umfasst.

6. System nach einem der Ansprüche 1 bis 5, **dadurch gekennzeichnet, dass** das geographische Modul geeignet ist, das Signal in Abhängigkeit von Ort und Geschwindigkeit der landwirtschaftlichen Arbeitsmaschine zu einer vorbestimmten Zeit vor dem geplanten Ereignis an das maschinenspezifische Modul zu übertragen.

7. System nach Anspruch 6, **dadurch gekennzeichnet, dass** das geographische Modul auch Informationen über Totzeiten der wenigstens einen Komponente (102) für eine Berechnung der vorbestimmten Zeit berücksichtigen kann.

8. Verfahren zum Einleiten von Schalt- und/oder Stellvorgängen bei landwirtschaftlichen Arbeitsmaschinen (100), wobei das Verfahren ein Erfassen von geographischen Informationen über den Ort der landwirtschaftlichen Arbeitsmaschine (100) in Echtzeit und Versetzen wenigstens einer Komponente (102) der landwirtschaftlichen Arbeitsmaschine (100) in einen Stand-by-Zustand, in dem die Komponente (102) in einen zumindest teilweise arbeitsbereiten Zustand gebracht wird, umfasst,
**dadurch gekennzeichnet, dass**
das Versetzen in Abhängigkeit eines für ein geplantes Ereignis indikatives Signal, basierend auf den geographischen Informationen, vor Eintreten des geplanten Ereignisses erfolgt.

9. Verfahren nach Anspruch 8, **dadurch gekennzeichnet, dass** das geplante Ereignis an einem vorbestimmten Ort (210) stattfindet und die geographischen Informationen zumindest den vorbestimmten Ort (210) umfassen.

10. Verfahren nach Anspruch 8 oder 9, **dadurch gekennzeichnet, dass** das Signal vor Eintritt des geplanten Ereignisses in Abhängigkeit von der Geschwindigkeit (v) und dem Ort der landwirtschaftlichen Arbeitsmaschine (100) von einem geographischen Modul an ein maschinenspezifisches Modul, das die wenigstens eine Komponente (102) steuert, übertragen wird.

11. Verfahren nach einem der Ansprüche 8 bis 10, **dadurch gekennzeichnet, dass** das Signal zu einer vorbestimmten Zeit vor Eintritt des geplanten Ereignisses übertragen wird, wobei die vorbestimmte Zeit für die wenigstens eine Komponente (102) spezifisch ist.

12. Verfahren nach Anspruch 11, **dadurch gekennzeichnet, dass** die vorbestimmte Zeit größer als die Totzeit der wenigstens einen Komponente (102) ist und/oder die Totzeit umfasst.

13. Verfahren nach einem der Ansprüche 8 bis 12, **dadurch gekennzeichnet, dass** das Versetzen in den Stand-by-Zustand wenigstens eines von
Überführen der Komponente (102) in eine Arbeitsstellung;
Einschalten der Komponente (102);
Einstellen wenigstens eines Betriebsparameters auf den Arbeitswert;
umfasst.

14. Verfahren nach einem der Ansprüche 8 bis 13, **dadurch gekennzeichnet**, das die wenigstens eine Komponente (102) vom maschinenspezifischen Modul von dem Stand-by-Zustand in einen Betriebszustand versetzt wird, und/oder von einem Ruhezustand in den Stand-by-Zustand versetzt wird und/oder von dem Betriebszustand in den Ruhezustand versetzt wird und/oder von dem Betriebszustand in den Stand-by-Zustand versetzt wird.

15. Verfahren nach Anspruch 14, **dadurch gekennzeichnet, dass** der Energieverbrauch der Komponente (102) im Ruhezustand geringer als im Stand-by-Zustand und im Betriebszustand ist.

## Claims

1. Electronic machine management system for initiating switching and/or actuating operations in agricultural working machines (100), wherein the system comprises a geographical module which determines geographical information relating to the location of the agricultural working machine (100) in real time, and a machine-specific module which controls components (102) of the agricultural working machine,
**characterized in that**
before a planned event occurs, the geographical module transmits a signal indicative of this event to the machine-specific module on the basis of the geographical information, and **in that**, on the basis of this signal, the machine-specific module changes at least one of the components (102) to a standby state in which the component (102) is changed to a state that is at least partially ready for work.

2. System according to Claim 1, **characterized in that** the machine-specific module can also set an operating mode of the at least one component (102) to an operating state and to an idle state.

3. System according to Claim 2, **characterized in that** the machine-specific module can change the at least one component (102) from the idle state to the standby state on account of the signal and the machine-specific module is also suitable for changing the at least one component (102) from the operating state to the idle state.

4. System according to one of Claims 1 to 3, **characterized in that** the geographical module comprises a position sensor and a speed sensor and transmits the signal to the machine-specific module on the basis of a position and a speed (v) of the agricultural working machine.

5. System according to one of Claims 1 to 4, **characterized in that** the standby state comprises at least one of:
transferring the component to a working position;
switching on the component;
setting at least one operating parameter to the working value.

6. System according to one of Claims 1 to 5, **characterized in that** the geographical module is suitable for transmitting the signal to the machine-specific module at a predetermined time before the planned event on the basis of the location and speed of the agricultural working machine.

7. System according to Claim 6, **characterized in that** the geographical module can also take into account information relating to downtimes of the at least one component (102) for calculating the predetermined time.

8. Method for initiating switching and/or actuating operations in agricultural working machines (100), wherein the method comprises capturing geographical information relating to the location of the agricultural working machine (100) in real time and changing at least one component (102) of the agricultural working machine (100) to a standby state in which the component (102) is changed to a state that is at least partially ready for work,
**characterized in that**
the changing is carried out, on the basis of a signal indicative of a planned event, before the planned event occurs on the basis of the geographical information.

9. Method according to Claim 8, **characterized in that** the planned event takes place at a predetermined location (210) and the geographical information comprises at least the predetermined location (210).

10. Method according to Claim 8 or 9, **characterized in that**, before the planned event occurs, the signal is transmitted from a geographical module to a machine-specific module, which controls the at least one component (102), on the basis of the speed (v) and the location of the agricultural working machine (100).

11. Method according to one of Claims 8 to 10, **characterized in that** the signal is transmitted at a predetermined time before the planned event occurs, wherein the predetermined time is specific to the at least one component (102).

12. Method according to Claim 11, **characterized in that** the predetermined time is greater than the downtime of the at least one component (102) and/or comprises the downtime.

13. Method according to one of Claims 8 to 12, **characterized in that** the changing to the standby state comprises at least one of
transferring the component (102) to a working position;
switching on the component (102);
setting at least one operating parameter to the working value.

14. Method according to one of Claims 8 to 13, **characterized in that** the at least one component (102) is changed from the standby state to an operating state and/or is changed from an idle state to the standby state and/or is changed from the operating state to the idle state and/or is changed from the operating state to the standby state by the machine-specific module.

15. Method according to Claim 14, **characterized in that** the energy consumption of the component (102) is lower in the idle state than in the standby state and in the operating state.

## Revendications

1. Système électronique de gestion d'appareils, destiné à lancer des processus de commutation et/ou de réglage sur des machines de travail agricoles (100), le système comprenant un module géographique, qui détermine en temps réel des informations géographiques sur le lieu de la machine de travail agricole (100) et un module spécifique à la machine, qui commande des composants (102) de la machine de travail agricole, **caractérisé en ce qu'**en fonction des informations géographiques, avant l'intervention d'un événement planifié, le module géographique transfère au module spécifique à la machine un signal indicatif dudit événement et **en ce qu'**en fonction dudit signal, le module spécifique à la machine passe au moins l'un des composants (102) dans un état d'attente, en amenant le composant (102) au moins en partie dans un état prêt à fonctionner.

2. Système selon la revendication 1, **caractérisé en ce que** le module spécifique à la machine est apte à régler par ailleurs un mode de fonctionnement de l'au moins un composant (102) dans un état de fonctionnement et dans un état de repos.

3. Système selon la revendication 2, **caractérisé en ce que** suite au signal, le module spécifique à la machine est apte à passer l'au moins un composant (102) de l'état de repos dans l'état d'attente et le module spécifique à la machine est apte par ailleurs à passer l'au moins un composant (102) de l'état de fonctionnement dans l'état de repos.

4. Système selon l'une quelconque des revendications 1 à 3, **caractérisé en ce que** le module géographique comprend un capteur de position et un capteur de vitesse et transmet le signal en fonction d'une position et d'une vitesse (v) de la machine de travail agricole au module spécifique à la machine.

5. Système selon l'une quelconque des revendications 1 à 4, **caractérisé en ce que** l'état d'attente comprend au moins l'un des phénomènes suivants :
le passage du composant dans une position de travail ;
la mise en route du composant ;
le réglage d'au moins un paramètre de service sur la valeur de travail.

6. Système selon l'une quelconque des revendications 1 à 5, **caractérisé en ce que** le module géographique est apte à transmettre le signal en fonction du lieu et de la vitesse de la machine de travail agricole à un temps prédéfini avant l'événement planifié au module spécifique à la machine.

7. Système selon la revendication 6, **caractérisé en ce que** le module géographique peut aussi considérer des informations sur des temps morts de l'au moins un composant (102), pour un calcul du temps prédéfini.

8. Procédé, destiné à lancer des processus de commutation et/ou de réglage sur des machines de travail agricoles (100), le procédé comprenant une détection en temps réel d'informations géographiques sur le lieu de la machine de travail agricole (100) et le passage d'au moins un composant (102) de la machine de travail agricole (100) dans un état d'attente, en ce que le composant (102) est amené dans un état au moins partiellement prêt à fonctionner, **caractérisé en ce que** le passage s'effectue en fonction d'un signal indicatif d'un événement planifié, sur la base des informations géographiques, avant l'intervention de l'événement planifié.

9. Procédé selon la revendication 8, **caractérisé en ce que** l'événement planifié se déroule en un lieu (210) prédéfini et les informations géographiques comprennent au moins le lieu (210) prédéfini.

10. Procédé selon la revendication 8 ou 9, **caractérisé en ce que** le signal est transféré avant l'intervention de l'événement planifié, en fonction de la vitesse (v) et du lieu de la machine de travail agricole (100), d'un module géographique à un module spécifique à la machine, qui commande l'au moins un composant (102).

11. Procédé selon l'une quelconque des revendications 8 à 10, **caractérisé en ce que** le signal est transféré à un temps prédéfini avant l'introduction de l'événement planifié, le temps prédéfini étant spécifique pour l'au moins un composant (102).

12. Procédé selon la revendication 11, **caractérisé en ce que** le temps prédéfini est supérieur au temps mort de l'au moins un composant (102) et/ou comprend le temps mort.

13. Procédé selon l'une quelconque des revendications 8 à 12, **caractérisé en ce que** le passage dans l'état d'attente comprend au moins l'un des phénomènes suivants :
le passage du composant (102) dans une position de travail ;
la mise en route du composant (102) ;
le réglage d'au moins un paramètre de service sur la valeur de travail.

14. Procédé selon l'une quelconque des revendications 8 à 13, **caractérisé en ce que** l'au moins un composant (102) est passé par le module spécifique à la machine de l'état d'attente dans un état de fonctionnement et/ou d'un état de repos dans l'état d'attente et/ou de l'état de fonctionnement dans l'état de repos et/ou de l'état de fonctionnement dans l'état d'attente.

15. Procédé selon la revendication 14, **caractérisé en ce que** la consommation en énergie du composant (102) à l'état de repos est plus faible que dans l'état d'attente ou dans l'état de fonctionnement.
